# EUROPÄISCHE PATENTANMELDUNG

(11) **EP 0 837 089 A1**
(43) Veröffentlichungstag der Anmeldung: **22.04.1998**
(21) Anmeldenummer: 97117564.1
(22) Anmeldetag: 10.10.1997
(51) Int. Cl.: C08G 81/02

(54) **Verfahren zur Herstellung von Pfropfcopolymeren**

(30) Priorität: 15.10.1996 DE 19642489
(71) Anmelder: BASF AKTIENGESELLSCHAFT, 67056 Ludwigshafen (DE)
(72) Erfinder: Gottschalk, Axel, Dr., 67435 Neustadt (DE); Engelhardt, Ralf, 67059 Ludwigshafen (DE); Weber, Martin, Dr., 67487 Maikammer (DE); Knoll, Konrad, Dr., 67069 Ludwigshafen (DE)

(57) **Zusammenfassung**

Verfahren zur Herstellung von Pfropfcopolymeren durch anionische Polymerisation, dadurch gekennzeichnet, daß man Polymere (A), die mindestens ein anionisches Kettenende aufweisen mit Polymeren (B), die mindestens eine Nitrilgruppe enthalten, in Gegenwart eines Lösungsmittels umsetzt.

## Beschreibung

Die vorliegende Erfindung betrifft ein Verfahren zur Herstellung von Pfropfcopolymeren durch anionische Polymerisation.

Die anionische Polymerisation ist ein an sich bekanntes Verfahren mit dem gezielt Polymere bestimmter Struktur und definierter Molekulargewichte hergestellt werden können. Allerdings kann dieses Verfahren nur eingeschränkt angewendet werden, sollen Monomere oder Polymere umgesetzt werden, die funktionelle Gruppen enthalten, da es aufgrund der hohen Reaktivität der Anionen häufig zu unerwünschten Nebenreaktionen kommt.

Verfahren zur Herstellung von Blockcopolymeren, die Blöcke enthalten, deren Monomeren funktionelle Gruppen wie Nitrilgruppen aufweisen, sind beispielsweise in der DE-A-44 25 916 offenbart. Zur Herstellung von Polystyrol-b-Polystyrolacrylnitril wird dort vorgeschlagen, Styrol zunächst anionisch zu polymerisieren, das Kettenende mit einem Thiol zu verkappen und eine radikalische Polymerisation eines Monomerengemisches aus Styrol und Acrylnitril anzuschließen. Da es bei dieser Reaktionsführung zu Übertragungsreaktionen kommt, ist die Ausbeute an Blockcopolymeren nicht zufriedenstellend.

Ein weiteres Verfahren zur Herstellung von Blockcopolymeren mittels anionischer Polymerisation ist in der DE-P-195 42 643.6 beschrieben. Nach dieser Methode werden in einem ersten Schritt olefinische Monomere anionisch polymerisiert, das Kettenende verkappt und anschließend Monomere mit funktionellen Gruppen, bevorzugt Methylmethacrylat oder ε-Caprolacton, polymerisiert.

M. Morten "Anionic Polymerisation". Principles and Practice", Academic Press, New York 1983, S. 222 ist beispielsweise zu entnehmen, daß Polystyrol mittels anionischer Polymerisation mit Polymethylmethacrylat zu Pfropfcopolymeren umgesetzt werden kann. In der US 3 786 116 wurden erstmals Styrolmacromonomere, die reaktive Kettenenden aufweisen, beschrieben. Der Aufbau von Kammpolymeren über Makromonomere ist in P. Remp, E. Franta "Advances in Polymer Science", Bd 58, S.1, 1984 zusammengefaßt.

Pfropfcopolymere, deren Hauptketten aus Nitrilgruppen enthaltenden Monomeren, beispielsweise aus Mischungen aus Styrol und Acrylnitril, aufgebaut sind, werden durch radikalische Polymerisation hergestellt, wie u.a. aus B. Vollmert "Grundriß der Makromolekularen Chemie", Bd 1, S. 116, Vollmert Verlag, Karlsruhe, 1988 zu ersehen ist. Es ist jedoch schwierig die Reaktion zu kontrollieren und Pfropfcopolymeren mit definierter Struktur aufzubauen.

Aufgabe der vorliegenden Erfindung war es deshalb, ein neues Verfahren zur Herstellung von Pfropfcopolymeren zu entwickeln, bei dem Polymere, die Nitrilgruppen enthalten die Pfropfgrundlage darstellen.

Demgemäß wurde ein Verfahren gefunden, bei dem die Pfropfcopolymeren durch anionische Polymerisation hergestellt werden, wobei Polymere (A), die mindestens ein anionisches Kettenende aufweisen mit Polieren (B), die mindestens eine Nitrilgruppe enthalten, in Gegenwart eines Lösungsmittels umgesetzt werden.

Zur Herstellung der Polymeren A kommen alle Monomeren in Betracht, die sich anionisch polymerisieren lassen.

So können die Polymeren A aus olefinisch ungesättigten Monomeren aufgebaut sein. Dabei können prinzipiell alle olefinisch ungesättigten Monomeren eingesetzt werden, die keine funktionellen Gruppen wie Säure- oder Hydroxygruppen enthalten.

Bevorzugt werden konjugierte Diene als Monomere verwendet. Darunter werden solche mit 4 bis 16 C-Atomen bevorzugt. Besonders bevorzugte konjugierte Diene enthalten 4 bis 8 C-Atome. Es kommen sowohl lineare als auch cyclische konjugierte Diene in Betracht. Diese können als Substituenten Alkylgruppen, bevorzugt C₁ bis C₃-Alkylgruppen, insbesondere Methyl, enthalten.

Als Beispiele seien 1,3-Butadien, 1,3-Pentadien, 2-Methylbuta-1,3-dien, 2,3-Dimethylbuta-1,3-dien und konjugierte Hexadiene, bevorzugt 1,3-Hexadien genannt. Ganz besonders bevorzugt wird 1,3-Butadien oder 2-Methylbuta-1,3-dien als Monomer verwendet. Es können auch Mischungen unterschiedlicher olefinisch ungesättigter Monomerer zum Aufbau der Polieren A verwendet werden, wobei das Mischungsverhältnis beliebig ist.

Das mittlere Molekulargewicht von Polymeren A die aus olefinisch ungesättigten Monomeren aufgebaut sind, ist in weiten Bereichen unkritisch. Im allgemeinen wird das mittlere Molekulargewicht entsprechend der gewünschten Eigenschaften des Pfropfcopolymeren gewählt. In der Regel liegt das mittlere Molekulargewicht (Zahlenmittelwert Mn) des Polymeren A im Bereich von 5000 bis 500 000, bevorzugt von 10 000 bis 100 000 g/mol.

Weitere bevorzugte Polymere A sind aus vinylaromatischen Monomeren der allgemeinen Formel I 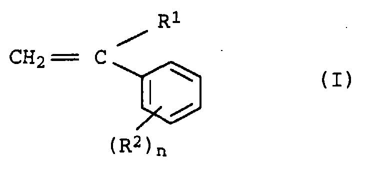 aufgebaut. Darin bedeuten R¹ und R² unabhängig voneinander ein Wasserstoffatom, Halogenatom oder eine C₁- bis C₈-Alkylgruppe. Die Variable n steht für eine ganze Zahl von 1 bis 5. Als Beispiele seien Styrol, p-Chlorstyrol, α-Methylstyrol, p-Methylstyrol, Vinyltoluol und p-t-Butylstyrol genannt. Die Polymeren A können auch aus einer Mischung unterschiedlicher vinylaromatischer Monomerer aufgebaut sein. Vorzugsweise wird jedoch Styrol allein verwendet. Das mittlere Molekulargewicht (Zahlenmittelwert) von Polymeren A auf der Basis vinylaromatischer Monomerer ist im allgemeinen unkritisch. In der Regel liegt es im Bereich von 5000 bis 500 000, bevorzugt im Bereich von 10 000 bis 100 000 g/mol.

Zu den bevorzugten Polieren A zählen darüberhinaus auch Blockcopolymere, insbesondere Blockcopolymere, die aus einem Block aus vinylaromatischen Monomeren und einem Block aus konjugierten Dienen aufgebaut sind. Monomere dieser Art wurden bereits oben beschrieben.

Die Herstellung der Polymeren A kann durch bekannte Methoden der anionischen Polymerisation erfolgen. Die Blockcopolymeren können beispielsweise durch sequentitielle Addition der Monomeren oder durch Kopplungstechniken hergestellt werden.

Derartige Verfahren werden z.B. in den US-Patentschriften 3 251 905, 3 390 207, 3 598 887 und 4 219 627 ausführlich beschrieben. Als Initiatoren für die anionische Polymerisation eignen sich alkalimetallorganische Verbindungen, vorzugsweise Lithiumalkyle wie Methyllithium, Ethyllithium, n- oder s-Butyllithium oder Isopropyllithium. Besonders bevorzugt wird n- oder s-Butyllithium eingesetzt. Als Lösungsmittel für die Polymerisation eignen sich zweckmäßig geradkettige oder verzweigte aliphatische Kohlenwasserstoffe, z.B n-Octan oder n-Hexan, sowie einfache oder substituierte cycloaliphatische und aromatische Kohlenwasserstoffe wie Cyclohexan, Methylcyclohexan oder Toluol, Benzol, Alkylbenzole sowie jede beliebige Mischung der aliphatischen, cycloaliphatischen und aromatischen Kohlenwasserstoffe. Vorteilhaft wird Cyclohexan oder Ethylbenzol als Lösungsmittel verwendet.

Als Lösungsmittelkomponenten sind ferner Ether wie Tetrahydrofuran oder Diethylether sowie tertiäre Amine z.B. Tetramethylethylendiamin oder Pyridin in Konzentrationen von 0,01 bis 20, vorzugsweise 0,01 bis 2 Gew.-% geeignet. Bevorzugt ist Tetrahydrofuran.

Durch geeignete Wahl des Lösungsmittels können z.B. konjugierte Diene auf unterschiedliche Weise miteinander verknüpft werden. Wird beispielsweise 1,3-Butadien in einem unpolaren Lösungsmittel zum Polymeren A, bzw. einem Butadienblock umgesetzt, ist der Anteil der über die Kohlenstoffatome 1 und 4 miteinander verknüpften Butadiene sehr hoch (zumeist über 80 %), wodurch das Polymere A bzw. der Butadienblock mit tiefer Glasübergangstemperatur (etwa zwischen -80 bis -100°C) resultieren kann.

Alle Einsatzstoffe müssen in der Regel von Sauerstoff- und protonenaktiven Verunreinigungen befreit werden, was z.B. durch Kontaktieren mit Metallorganylen oder durch adsorptive Reinigung, z.B. mit Calciumhydrid erfolgen kann. Die Durchführung der Polymerisation erfolgt im allgemeinen unter Inertgasbedingungen bei Temperaturen von -100 bis +120°C, vorzugsweise bei -80 bis +80°C. Es wird bei Drücken gearbeitet, bei denen die Monomeren und Lösungsmittel bei der Polymerisationstemperatur nicht verdampfen. Nach beendeter Polymerisation wird das Polymerisationsgemisch mit einer ausreichenden Menge Wasser, Methanol oder Isopropanol versetzt, um die aktiven Endgruppen bzw. überschüssigen Initiator zu desaktivieren.

Bei der Herstellung der Blockcopolymeren wird im allgemeinen so vorgegangen, daß in einer ersten Polymerisationsstufe der vinylaromatische Kohlenwasserstoff zur Bildung des vinylaromatischen Blocks vollständig auspolymerisiert wird, im zweiten Polymerisationsschritt der Dienkohlenwasserstoff zur Bildung des zweiten Blocks vollständig umgesetzt wird. Dabei entstehen scharfe Übergänge zwischen den einzelnen Blöcken.

Es kann vorteilhaft sein, das lebende Anion des Polymeren A mit sterisch gehinderte Gruppen tragende Verbindungen wie Diphenylethylen zu verkappen.

Erfindungsgemäß werden die Polymeren A mit Polymeren B umgesetzt, die mindestens eine Nitrilgruppe enthalten. Bevorzugt werden Polymere B, die in einem Lösungsmittel löslich sind, da erfindungsgemäß die Umsetzung in einem Lösungsmittel durchgeführt wird.

Besonders bevorzugt werden Copolymere auf der Basis von Acrylnitril oder Methacrylnitril oder deren Mischungen, worunter solche mit vinylaromatischen Comonomeren besonders bevorzugt werden. Daneben können die geeigneten Copolymeren weitere Comonomere enthalten. Zu den bevorzugten Polymeren B zählen Copolymere, die aufgebaut sind aus
c₁) 0,1 bis 50, bevorzugt 5 bis 45, insbesondere 15 bis 40 Gew.-% Acrylnitril oder Methacrylnitril oder deren Mischungen und
c₂) 50 bis 99,9 bevorzugt 55 bis 95, insbesondere 60 bis 85 Gew.-% einer vinylaromatischen Verbindung der allgemeinen Formel I,
c₃) 0 bis 50, bevorzugt 0 bis 40, insbesondere 0 bis 30 Gew.-% eines weiteren Monomeren.

Dabei beziehen sich die Gewichtsprozentangaben jeweils auf die Summe der Komponenten c₁ bis c₃. Beispiele von vinylaromatischen Verbindungen, die als Komponente c₂ verwendet werden können, wurden bereits unter A genannt. Besonders bevorzugt wird Styrol oder α-Methylstyrol als c₂ verwendet. c₂ kann auch aus einer Mischung unterschiedlicher vinylaromatischer Verbindungen bestehen.

Als Beispiele geeigneter Monomerer c₃ seien genannt:
Acrylsäure, Methacrylsäure, weiterhin Dicarbonsäuren wie Maleinsäure oder Fumarsäure sowie deren Anhydride wie Maleinsäureanhydrid;
Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid;
C₁- bis C₄-Alkylester der Methacrylsäure wie Methylmethacrylat, Ethylmethacrylat, n-Propylmethacrylat, i-Propylmethacrylat, n-Butylmethacrylat, Isobutylmethacrylat, s-Butylmethacrylat, t-Butylmethacrylat sowie Hydroxyethylmethacrylat;
aromatische und araliphatische Ester der Acrylsäure oder der Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat; ungesättigte Ether wie Vinylmethylether
sowie Mischungen dieser Monomeren.

Wegen ihrer Hauptkomponenten Styrol und Acrylnitril werden derartige Polymeren B allgemein auch als SAN-Polymere bezeichnet, sind bekannt und z.T. auch handelsüblich. Sie haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 200000 g/mol. Man erhält sie in bekannter Weise durch Substanz-, Lösungs-, Suspensions-, Fällungs- oder Emulsionspolymerisation. Einzelheiten dieser Verfahren sind z.B. im Kunststoffhandbuch, Hrg. R. Vieweg und G. Daumiller, Bd. V "Polystyrol", Carl-Hanser-Verlag München 19969, S. 118 ff beschrieben.

Es hat sich als besonders günstig erwiesen, die Polymeren B vor der Umsetzung mit den Polymeren A mit einer metallorganischen Verbindung zu titrieren, um die Polymeren B von Sauerstoff- und protonenaktiven Verunreinigungen zu befreien. Lithiumorganische Verbindungen wie Lithiumalkylverbindungen werden als Titrationsmittel bevorzugt. Darunter eignet sich insbesondere s-Butyllithium. Die metallorganischen Verbindungen werden in einem unpolaren Lösungsmittel, bevorzugt einem Kohlenwasserstoff, insbesondere Hexan, gelöst und zu einer Lösung des Polymeren B in einem geeigneten Lösungsmittel getropft. Dabei färbt sich die Lösung kurz nach dem Eintropfen des Titrationsmittels gelb. Der Endpunkt der Titration ist erreicht, wenn die Gelbfärbung nach dem Eintropfen nicht sofort wieder verschwindet. Bleibt die Gelbfärbung bestehen, ist die Lösung bereits übertitriert. Als Lösungsmittel eignen sich polar aprotische Lösungsmittel, in denen die Polymeren B gut löslich sind. Die bereits oben angeführten Lösungsmittel oder deren Mischungen können eingesetzt werden. Besonders bevorzugt werden jedoch aromatische Kohlenwasserstoffe, insbesondere Alkylaromaten. Ganz besonders bevorzugt wird Ethylbenzol verwendet.

Die Umsetzung der Polymeren A mit den Polymeren B findet bevorzugt in dem selben Lösungsmittel statt, in dem auch die Polymeren B bereits für die Titration gelöst wurden. Selbstverständlich kann es auch vorteilhaft sein, die Polymeren A und B in unterschiedlichen Lösungsmitteln zu lösen oder die Polieren B in einem Lösungsmittel zu titrieren und danach das Lösungsmittel für das Polymere B zu wechseln.

Die Umsetzung der Polieren A mit den Polymeren B findet im allgemeinen bei Temperaturen von -20 bis +60°C statt. Da die Pfropfreaktion über anionische Kettenenden verläuft, sollten Luft und Feuchtigkeit möglichst ausgeschlossen werden, um die lebenden Kettenenden nicht vorzeitig zu desaktivieren.

Das Verhältnis der Polymeren A zu den Polymeren B kann in weiten Bereichen variiert werden, sodaß Pfropfcopolymere beliebiger Zusammensetzung entstehen. Bevorzugt werden die Polieren A zu den Polymeren B im molaren Verhältnis von 1 : 0,2 bis 1 : 5 umgesetzt.

Es können Styrol, α-Methylstyrol, p-Methylstyrol oder Vinyltoluol verwendet werden. Besonders bevorzugt wird Styrol eingesetzt.

Pro lebendes Ende des Blockes A werden in der Regel 1 bis 20, bevorzugt 1 bis 10 Äquivalente der vinylaromatischen Verbindung II eingesetzt. Besonders bevorzugt wird das bzw. die lebenden Enden des Blockes A mit jeweils 1 bis 5 Äquivalenten der vinylaromatischen Verbindung der allgemeinen Formel II verkappt.

Für die anschließende Umsetzung mit Verbindungen der allgemeinen Formel I verwendet man in der Regel von 1 bis 10, bevorzugt 1 bis 5, insbesondere von 1 bis 3 Äquivalente pro Äquivalent lebendes Kettende.

Nachdem die Pfropfcopolymerisation abgeschlossen ist, wird diese anionische Reaktion im allgemeinen dadurch beendet, daß das Reaktionsgemisch mit Wasser oder Alkoholen wie Methanol oder Isopropanol versetzt wird, um die lebenden Endgruppen bzw. überschüssigen Initiator zu desaktivieren.

Die so erhaltenen Pfropfcopolymeren, die als monomere Bausteine konjugierte Diene enthalten, können durch Hydrierbehandlung in Polymere übergeführt werden, in denen die aliphatischen ungesättigten Bindungen teilweise abgesättigt sind, d.h. die einen Hydrierungsgrad von 50 bis 100 Gew.-% aufweisen, bevorzugt 70 bis 100 und insbesondere 90 bis 100 Gew.-%.

Die Hydrierung wird vorzugsweise mit molekularem Wasserstoff und Katalysatoren auf Basis von Metallen oder Metallsalzen der achten Gruppe des Periodensystems durchgeführt. Sie kann in heterogener Phase z.B. mit Raney-Nickel oder bevorzugt in homogener Phase mit Katalysatoren auf Basis von Salzen, insbesondere Carboxylaten, Alkoxiden oder Enolaten des Kobalts, Nickels oder Eisens, die mit Metallalkylen, insbesondere mit Aluminiumalkylen, kombiniert sind oder homogen durch in situ erzeugte Diimine aus z.B. Tosylhydrazid erfolgen. Verfahren zur selektiven Hydrierung von Blockcopolymeren werden u.a. in den US-Patentschriften 3 113 986 und 4 226 952 beschrieben.

Das Reaktionsgemisch kann zur Isolierung des Pfropfcopolymeren nach bekannten Verfahren wahlweise direkt zur Trockne erhitzt oder mit Wasserdampf behandelt werden, wobei das Lösungsmittel abdestilliert wird. Es kann gleichfalls in einem Überschuß Nichtlösungsmittel wie Ethanol gefällt und mechanisch abgetrennt und getrocknet oder durch Extruderentgasung aufgearbeitet werden.

Die nach dem erfindungsgemäßen Verfahren erhältlichen Pfropfcopolymeren können zu Formkörpern, Folien oder Fasern verarbeitet werden. Dies kann beispielsweise nach üblichen Verfahren wie Extrusion oder Spritzguß erfolgen. Die Pfropfcopolymeren eignen sich auch als Phasenvermittler in Polymerblends, z.B. für Mischungen aus Polystyrolen mit Polycarbonaten, Polystyrolen und Styrol/Acrylnitril-Copolymerisaten, Polyphenylenethern und Polycarbonaten, Polyphenylenethern und Styrol/Acrylnitril-Copolymerisaten oder Polyarylenethern wie Polyarylenethersulfonen oder -ketonen mit Polycarbonaten.

### Beispiele

Alle Arbeiten wurden unter Stickstoff durchgeführt.

### Reinigung der Monomeren und Lösungsmittel

Styrol: vorgetrocknet über Calciumhydrid, zweifach destilliert, mit Dibutylmagnesium versetzt, gerührt, entgast und in ein Vorratsgefäß einkondensiert.
Ethylbenzol: vorgetrocknet über Calciumhydrid, destilliert, über Kalium getrocknet und destilliert. Die Reinheit des Lösungsmittels wurde jeweils vor der Polymerisationsreaktion überprüft. Hierzu wurden jeweils 0,3 ml Styrol bei Raumtemperatur vorgelegt, das Ethylbenzol zugegeben und diese Mischung mit einer 1,5 molaren Lösung von s-Butyllithium in Hexan langsam bis zur ersten Gelbfärbung, die das Entstehen des Styrolanions anzeigt, titriert. Bei Bestehen der Gelbfärbung über einen Zeitraum von 30 Minuten wurde davon ausgegangen, daß das Lösungsmittel hinreichend rein war.
Cyclohexan: getrocknet über Molekularsieb

### Herstellung der Pfropfcopolymeren

### Pfropfcopolymer C1

1200 ml Ethylbenzol (EtB) wurden vorgelegt und auf Reinheit geprüft. Danach wurden 400 ml (3,5 mol) Styrol zugegeben und die Polymerisation durch die Zugabe von 8 ml (12 mmol) einer 1,5 molaren s-Butyllithium-Lösung in Hexan gestartet. Nach einer Stunde bei 60 °C wurde die Reaktionsmischung auf Raumtemperatur abgekühlt und eine Probe zu Bestimmung des Molgewichtes (Gelpermeationschromatographie, Polystyrolstandard) entnommen. Das so erhaltene Polymere A1 hatte ein Molekulargewicht (Zahlenmittelwert Mₙ) von 32 000 g/mol und eine Polydispersität (PDI) von 1,07. In einem zweiten Reaktionsgefäß wurden 363g eines fein gepulverten und getrockneten Styrol/Acrylnitril-Copolymeren (SAN) (Acrylnitrilgehalt: 20 Gew.-%, Viskositätszahl 83) in 3000 ml Ethylbenzol gelöst. Diese Lösung wurde mit einer 1,5 molaren s-Butyllithium-Lösung in Hexan titriert. Der Endpunkt der Titration wurde dadurch angezeigt, daß die Gelbfärbung nicht mehr sofort nach dem Eintropfen der s-Butyllithium-Lösung verschwand. Der Inhalt des ersten Reaktionsgefäßes wurde anschließend innerhalb einer Stunde unter starkem Rühren in das zweite Reaktionsgefäß überführt. Es wurde eine Stunde nachgerührt. Anschließend wurde das Pfropfcopolymere C1 mittels einer Mischung aus Wasser und Methanol ausgefällt, abfiltriert und im Vakuum bei 60°C getrocknet.

### Pfropfcopolymer C2 bis C6

Die Versuche wurden wie unter C1 beschrieben durchgeführt, jedoch wurden das Lösungsmittel und die Einsatzstoffe in den in der Tabelle 1 angegebenen Mengen verwendet.

**Tabelle 1**

| Pfropfcopolymer | EtB [ml] | Styrol [ml]/[mol] | Starter [ml]/[mmol] | Polymere A2 bis A6 | | | SAN | EtB [ml] |
|---|---|---|---|---|---|---|---|---|
| | | | | | Mn [g/mol] | PDI | | |
| C2 | 2200 | 720/6,3 | 14,7/21,9 | A2 | 38700 | 1,07 | 73 | 600 |
| C3 | 1900 | 640/5,6 | 13,0/19,5 | A3 | 34300 | 1,06 | 145 | 1200 |
| C4 | 1700 | 560/4,9 | 11,5/17,0 | A4 | 29500 | 1,06 | 218 | 1800 |
| C5 | 1450 | 480/4,2 | 9,9/14,7 | A5 | 29800 | 1,05 | 290 | 2400 |
| C6 | 950 | 320/2,8 | 6,5/9,7 | A6 | 34300 | 1,08 | 454 | 3600 |

### Pfropfcopolymer C7

1600 ml Ethylbenzol wurden auf Reinheit geprüft. Danach wurden 300 ml (2,6 mol) Styrol zugegeben und die Polymerisation durch die Zugabe von 6 ml (18 mmol) einer 1,5 molaren s-Butyllithium-Lösung in Hexan gestartet. Es wurde auf 40°C erwärmt und nach weiteren 2 Stunden Reaktionszeit eine Probe zur GPC-Untersuchung (Polystyrolstandard) entnommen. Das Polymere hatte ein Molekulargewicht Zahlenmittel) von 29 800 und eine Polydispersität von 1,06.

Anschließend wurden langsam 136 ml (1,68 Mol) Butadien zugegeben. Anschließend wurde 2 Stunden nachgerührt und auf Raumtemperatur abgekühlt. Es wurde erneut eine GPC-Probe entnommen. Das Styrol-Butadien-Blockcopolymere A7 hatte ein Molekulargewicht (Zahlenmittel) von 38 900 und eine Polydispersität von 1,06 (Polystyrol-Eichstandard).

In einem zweiten Reaktionsgefäß wurden 363 g eines fein gepulverten und getrockneten Styrol-Acrylnitril-Glycidylmethacrylat-Copolymeren (Acrylnitril-Gehalt: 17,5 Gew.-%, Glycidylmethacrylat-Gehalt: 2,5 Gew.-%, Viskositätszahl = 76) in 3000 ml Ethylbenzol gelöst. Diese Lösung wurde ebenfalls mit einer 1,5 molaren s-Butyllithium-Lösung in Hexan titriert und zwar, bis die Gelbfärbung nicht mehr sofort nach dem Eintropfen verschwand. Der Inhalt des ersten Reaktionsgefäß wurde dann innerhalb ca. 1 Stunde unter starkem Rühren in das zweite Reaktionsgefäß überführt. Nach einer Stunde wurde das Pfropfcopolymere ausgefällt (Methanol/Wasser), abfiltriert und im Vakuum bei 60°C getrocknet.

### Pfropfcopolymer zum Vergleich C*

3733 g Cyclohexan und 1600 g Styrol wurden vorgelegt. 16 mmol -Butyllithium (1,5 molar in Cyclohexan) wurden dazugegeben und die Temperatur stieg nach 9 min auf ein Maximum von 74°C an. Nach 50 min war die Temperatur auf 60°C gefallen. Nach 75 min wurden die Polystyrolanionen zunächst mit 17,6 mmol (1,05 ml) Ethylensulfid, anschließend mit 17,6 mmol (1,22 ml) Thioglykolsäure und 30 min später mit 24 mmol (1,85 ml) Isopropanol terminiert. Die Polymerlösung wurde in Ethanol gefällt, mit Ethanol gewaschen und anschließend bei 65°C im Vakuum getrocknet.

Von dem so erhaltenen Mercapto-terminierten Polystyrol wurden 400 g mit 320 g Styrol, 80 g Acrylnitril, 1200 g Toluol und 2,13 g Dibenzoylperoxid gemischt. Die Reaktionsmischung wurde auf 95°C erhitzt. Nach 32 Gew.-% Umsatz bei der Styrol-Acryl-Polymerisation erfolgte die Zugabe von 2,4 g Dicumylperoxid. Die Reaktion wurde noch 3 Stunden bei 110°C 9 Stunden bei 130°C und 5 Stunden bei 140°C fortgesetzt. Danach wurde das Polymer C* im Methanol ausgefällt und getrocknet.

Aus den Pfropfcopolymeren wurden Formmassen hergestellt. Hierzu wurden die Pfropfcopolymeren mit weiteren Polymeren gemischt. Als weitere Polymere wurden verwendet:
- Polymer D: Poly(2,6-dimethyl-1,4-phenylenether) mit einer reduzierten Viskosität von 0,56 (1 gew.-%ige Lösung in Chloroform bei 30°C gemäß DIN 53 728).
- Polymer E: ABS, bestehend aus 29 Teilen eines Polybutadien-Pfropfkautschuks (hergestellt gemäß EP 62 901) und 71 Teilen eines Styrol-Acrylnitril-Copolymeren mit 20 Gew.-% Acrylnitril und einer Viskositätszahl von 83 ml/g (gemessen gemäß DIN 53 727 als 0,5 gew.-%ige Lösung in DMF bei 23°C).
- Polymer F: Styrol-Butadien-Kautschuk mit der Blockfolge S-B-S'-B' (Styrolgehalt = 42 Gew.-%) und einer Härte Shore A von 87 (Tufprene® A der Fa. Asahi)

Die Polymeren wurden in den in Tabelle 2 angegebenen Mengen in einem Zweiwellenextruder (ZKS 30 der Firma Werner & Pfleiderer) bei einer Drehzahl von 200 U/min und einer Temperatur von 280°C gemischt, ausgetragen, abgekühlt, granuliert, getrocknet und zu entsprechenden Normprüfkörpern gespritzt.

Die Bestimmung der Kerbschlagzähigkeit erfolgte nach DIN 53 453, das Elastizitätsmodul wurde in einem Zugversuch nach DIN 53 455 bestimmt.

**Tabelle 2**

| Formmassen, enthaltend Pfropfcopolymere | | | | | | | | | |
|---|---|---|---|---|---|---|---|---|---|
| Bsp. Nr. | 1 | V1 | 2 | 3 | 4 | 5 | 6 | 7 | V2 |
| Komponenten: [Gew.-%] | | | | | | | | | |
| C1 | 10 | | | | | | | | |
| C* | | 10 | | | | | | | |
| C2 | | | 10 | | | | | | |
| C3 | | | | 10 | | | | | |
| C4 | | | | | 10 | | | | |
| C5 | | | | | | 10 | | | |
| C6 | | | | | | | 10 | | |
| C7 | | | | | | | | 10 | |
| D | 35 | 35 | 35 | 35 | 35 | 35 | 35 | 35 | 40 |
| E | 50 | 50 | 50 | 50 | 50 | 50 | 50 | 50 | 55 |
| F | 5 | 5 | 5 | 5 | 5 | 5 | 5 | 5 | 5 |

| Eigenschaften: | | | | | | | | | |
|---|---|---|---|---|---|---|---|---|---|
| Kerbschlagzähigkeit [kJ/m²] | 7 | 4 | 7 | 8 | 7 | 7 | 6 | 10 | 1 |
| Elastizitätsmodul [N/mm²] | 2100 | 2050 | 2140 | 2060 | 2090 | 2060 | 2060 | 1980 | 1900 |

## Patentansprüche

1. Verfahren zur Herstellung von Pfropfcopolymeren durch anionische Polymerisation, dadurch gekennzeichnet, daß man Polymere (A), die mindestens ein anionisches Kettenende aufweisen mit Polymeren (B), die mindestens eine Nitrilgruppe enthalten, in Gegenwart eines Lösungsmittels umsetzt.

2. Verfahren nach Anspruch 1, dadurch gekennzeichnet, daß man als Polymere A ein Polymer auf der Basis vinylaromatischer Monomerer einsetzt.

3. Verfahren nach Anspruch 1 oder 2, dadurch gekennzeichnet, daß man als Polymere A ein Blockcopolymer aus einem Block aus vinylaromatischen Monomeren und einem Block aus konjugierten Dienen einsetzt.

4. Verfahren nach einem der Ansprüche 1 bis 3, dadurch gekennzeichnet, daß man als Polymer A Polystyrol oder Polystyrol-b-Polybutadien einsetzt.

5. Verfahren nach einem der Ansprüche 1 bis 4, dadurch gekennzeichnet, daß man als Polymer B ein Copolymer auf der Basis von Styrol und Acrylnitril verwendet.

6. Verfahren nach einem der Ansprüche 1 bis 5, dadurch gekennzeichnet, daß man die Polymeren B vor der Umsetzung mit den Polymeren A mit einer Lösung einer metallorganischen Verbindung titriert.

7. Verfahren nach Anspruch 6, dadurch gekennzeichnet, daß man als metallorganische Verbindung s-Butyllithium verwendet.

8. Verfahren nach einem der Ansprüche 1 bis 7, dadurch gekennzeichnet, daß man die Umsetzung von A mit B in Ethylbenzol durchführt.

9. Verwendung der nach dem Verfahren gemäß einem der Ansprüche 1 bis 8 hergestellten Pfropfcopolymeren als Phasenvermittler in Polymermischungen.
